# EUROPÄISCHE PATENTANMELDUNG

(11) **EP 1 107 543 A2**
(43) Veröffentlichungstag der Anmeldung: **13.06.2001**
(21) Anmeldenummer: 00121936.9
(22) Anmeldetag: 09.10.2000
(51) Int. Cl.: H04M 1/247

(54) **Einrichtung zur Bedienung eines Endgerätes**

(30) Priorität: 04.12.1999 DE 19958508
(71) Anmelder: Deutsche Telekom AG, 53113 Bonn (DE)
(72) Erfinder: Barth, Uwe, 64747 Breuberg (DE)

(57) **Zusammenfassung**

Bei einer Einrichtung zur Bedienung eines an ein Telekommunikationsnetz angeschlossenen Endgerätes, insbesondere eines Telefons, mit einem Display, sind im Endgerät vorhandene Mittel zur Text- und/oder Graphik-Darstellung zur Darstellung mindestens eines Menüs zur Bedienerführung aus Informationen (Menü-Informationen) ausgebildet, die aus dem Telekommunikationsnetz empfangen werden. Im Endgerät sind Informationen (Endgeräte-Informationen), welche die Darstellungsmöglichkeiten des Menüs betreffen, abgelegt und werden bei Anforderung eines Dienstes an das Telekommunikationsnetz gesendet.

## Beschreibung

Die Erfindung betrifft eine Einrichtung zur Bedienung eines an ein Telekommunikationsnetz angeschlossenen Endgerätes, insbesondere eines Telefons, mit einem Display.

Betreiber von Telekommunikationsnetzen bieten in immer kürzer werdenden Zeitabständen zusätzliche Leistungsmerkmale und Dienste in ihren Netzen an. Die Realisierung derartiger Dienste bzw. Leistungsmerkmale (im folgenden auch nur Dienste genannt) erfolgt häufig nach bestimmten Standards und ist somit festgeschrieben. Es gibt jedoch innerhalb der Standards Möglichkeiten, über sogenannte optionale Ausstiege in den definierten Schnittstellen nicht standardisierte Leistungsmerkmale anzubieten. Über diese Schnittstellen werden zunehmend neue Dienste angeboten, um somit das jeweilige Telekommunikationsnetz für den Kunden interessanter zu gestalten.

Die Steuerung dieser Dienste erfolgt teilweise über umfangreiche Eingabe-Prozeduren. Häufig.sind mehr als zehn Ziffern erforderlich, wobei der jeweilige Teilnehmer oft überfordert ist. Eine geringe Akzeptanz dieser Dienste bei den Teilnehmern hat jedoch zur Folge, daß die Endgeräte die neuen Dienste entweder gar nicht, erst nach einem Up-date oder nur über die manuelle Eingabe von komplexen Steuerzeichen unterstützen.

Bei einem bekannten Verfahren zur Auswertung der Tastenbetätigung an einem Endgerät eines Telekommunikationsnetzes (DE 44 29 713 C2) ist unter anderem in einer programmgesteuerten Kommunikationsanlage ein Speicher für Bedienoberflächen vorgesehen, der in Abhängigkeit von dem jeweiligen Vermittlungszustand oder von einer Benutzereingabe dem Endgerät ein Menü zur Verfügung stellt. Hierbei ist jedoch eine Standardisierung des Endgerätes auf das jeweilige Menü erforderlich, was in der Praxis wegen der ständig neuen Dienste praktisch nicht möglich ist. Das bekannte Verfahren ist daher auch auf eine sogenannte Nebenstellen-Kommunikationsanlage gerichtet, bei dem in der Regel an die Anlage angepaßte Endgeräte verwendet werden.

Aufgabe der vorliegenden Erfindung ist es, die Benutzung von zusätzlichen Leistungsmerkmalen und Diensten dem Teilnehmer wesentlich zu erleichtern, ohne daß er dafür ein spezielles an die jeweiligen Leistungsmerkmale und Dienste angepaßtes Endgerät benötigt.

Diese Aufgabe wird erfindungsgemäß dadurch gelöst, daß im Endgerät vorhandene Mittel zur Text- und/oder Graphik-Darstellung zur Darstellung mindestens eines Menüs zur Bedienerführung aus Informationen (Menü-Informationen) ausgebildet sind, die aus dem Telekommunikationsnetz empfangen werden und daß im Endgerät Informationen (Endgeräte-Informationen), welche die Darstellungsmöglichkeiten des Menüs betreffen, abgelegt sind und bei Anforderung eines Dienstes an das Telekommunikationsnetz gesendet werden.

Netzseitig wird die Aufgabe dadurch gelöst, daß bei Anforderung eines bestimmten Dienstes durch das Endgerät im Telekommunikationsnetz aus einer Datenbank (Menü-Datenbank) Informationen über das mindestens eine zu dem bestimmten Dienst gehörende Menü in Abhängigkeit von der Endgeräte-Information ausgelesen und zum Endgerät übertragen werden, wobei die Menü-Datenbank eine Tabelle über die Zuordnung der Endgeräte-Informationen zu den abgelegten Menüs aufweist.

Durch die Unterstützung des Telekommunikationsnetzes mit Bedienoberflächen ist es möglich, Dienste unabhängig vom Endgerät zu realisieren, die der Teilnehmer in einfacher Weise nutzen kann. Der Anbieter von Diensten ist in der Lage, Änderungen bzw. Ergänzungen durchzuführen, ohne daß neue Endgeräte notwendig werden. Damit ist es möglich, sehr schnell neue Dienste anzubieten bzw. bestehende Dienste zu erweitern.

Zur Auswahl eines passenden Menüs aus der Menü-Datenbank kann bei der erfindungsgemäßen Einrichtung vorgesehen sein, daß die Endgeräte-Information eine Typen-Bezeichnung des Endgerätes ist oder daß die Endgeräte-Information Display-Daten enthält. Es sind im Rahmen der Erfindung auch weitere Endgeräte-Informationen möglich, wobei wesentlich ist, daß die Menü-Datenbank entsprechend der Entwicklung der Endgeräte auf dem laufenden bleibt.

Sollte ein in der Menü-Datenbank unbekanntes Endgerät oder Display oder ein Übertragungsfehler bei der Übertragung der Endgeräte-Information auftreten, kann gemäß einer Weiterbildung eine Bedienerleichterung dadurch vorgenommen werden, daß bei Nichtvorhandensein von Informationen über das Display des Endgerätes Informationen über mindestens ein Menü zum Endgerät übertragen werden, dessen Darstellung mit Hilfe eines einzeiligen Displays sinnvoll ist.

Obwohl die Erfindung die Übertragung der Endgeräte-Information und die Rückübertragung eines für das Endgerät passenden Menüs unmittelbar nach Belegen der Leitung nicht ausschließt, ist bei einer bevorzugten Weiterbildung vorgesehen, daß im Endgerät Informationen zu einem Menü abgelegt sind, das bei Aufnahme einer Verbindung zum Telekommunikationsnetz und/oder bei Inanspruchnahme eines Standarddienstes dargestellt wird. Damit hat der Teilnehmer selbst dann ein Menü zur Verfügung, wenn eine Verbindung zum Telekommunikationsnetz noch nicht aufgebaut ist, und kann beispielsweise endgeräte-interne Vorgänge steuern, wie beispielsweise Voreinstellungen des Endgerätes.

Bei Endgeräten, wie Telefonen, werden häufig Tasten neben dem Display angeordnet, wobei die Tasten als sogenannte Soft-Keys verschiedene Funktionen aufweisen können. Bei einer Weiterbildung sind daher Bedienelemente vorgesehen, deren Funktionen entsprechend den jeweils übertragenen Menü-Informationen gesteuert sind.

Eine vorteilhafte Ausführungsform der erfindungsgemäßen Einrichtung besteht darin, daß die Menü-Informationen über den Datenkanal (D) des Basisanschlusses des ISDN übertragen werden. Dabei ist vorzugsweise vorgesehen, daß die Übertragung in Form von Displayelementen und Informationen über die Lage der Displayelemente im Menü erfolgt. Diese Informationen werden der Menü-Datenbank für das jeweilige Endgerät entnommen.

Ausführungsbeispiele der Erfindung sind in der Zeichnung anhand mehrerer Figuren dargestellt und in der nachfolgenden Beschreibung näher erläutert. Es zeigt:
- Fig. 1: als Blockschaltbild eines an ein Telekommunikationsnetz angeschlossenes Telefon,
- Fig. 2: ein anderes an die Erfindung angepaßtes Telekommunikationsnetz als Blockschaltbild in stark vereinfachter Darstellung und
- Fig. 3: mehrere mit der Erfindung in verschiedenen Endgeräten dargestellte Menüs.

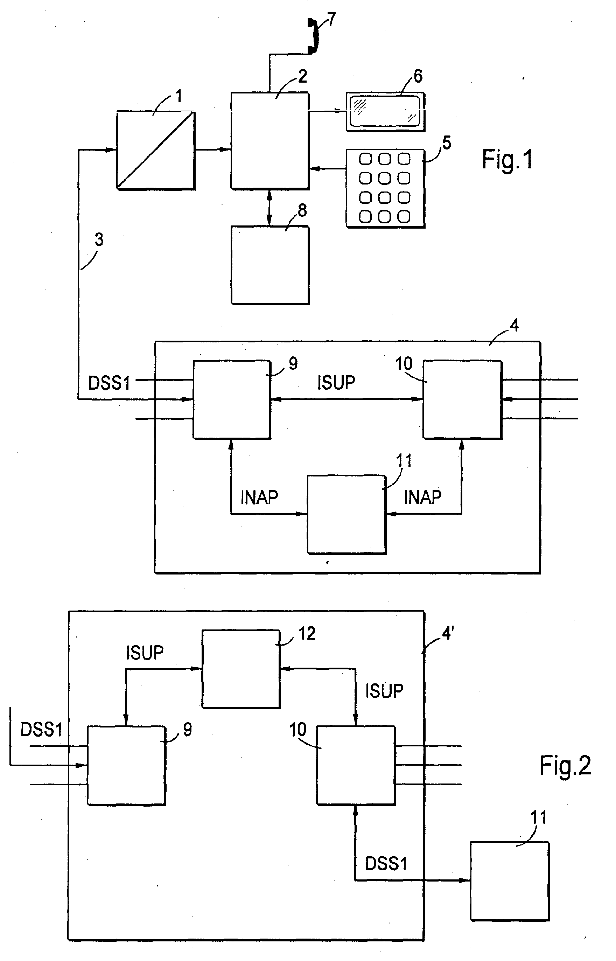

Von dem in Fig. 1 gezeigten Telefon sind lediglich die zum Verständnis der Erfindung erforderlichen Teile dargestellt. Über eine Netzanpassungseinrichtung 1 ist ein Prozessor 2 an die Leitung 3 zum Telekommunikationsnetz 4 angeschlossen. Der Prozessor 2 steuert sämtliche Vorgänge, beispielsweise die Umsetzung der Betätigungen der Tastatur 5 in die dem Telekommunikationsnetz 4 zuzuführenden Signale, insbesondere Wählsignale, und interne zur Steuerung des Telefons erforderliche Befehle. Ferner steuert der Prozessor 2 die Darstellung auf einem Display 6 und die Verarbeitung der zu einem Hörer 7 geleiteten und dort erzeugten Audio-Signale. Zur Speicherung von Programmen und Parametern - unter anderem auch vom Teilnehmer eingegebene Voreinstellungen und Telefonnummern - sowie zur vorübergehenden Speicherung von Informationen über Vermittlungszustände sind geeignete Speicher 8 vorgesehen und mit dem Prozessor 2 verbunden.

Bei der erfindungsgemäßen Einrichtung ist der Prozessor 2 mit Hilfe von bei 8 gespeicherten Programmen in der Lage, zugeführte Menü-Informationen auf dem Display 6 darzustellen und Endgeräte-Informationen an das Telekommunikationsnetz 4 zu senden.

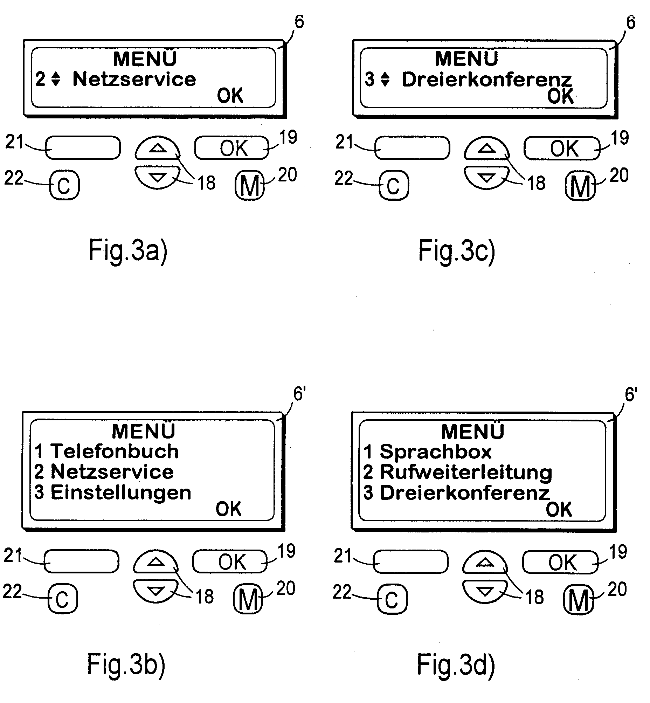

Von den im Telekommunikationsnetz 4 vorhandenen Vermittlungseinrichtungen sind lediglich zwei Vermittlungseinrichtungen 9, 10 dargestellt, die mit jeweils einem Menü-Server 11 Daten austauschen können. Geeignete Schnittstellen für die Datenverbindung der beschriebenen Teile sind beispielsweise DSS1 des D-Kanals, ISUP im Datenaustausch zwischen den Vermittlungseinrichtungen 9, 10 und INAP zum Datenaustausch zwischen dem Menü-Server 11 und den Vermittlungseinrichtungen. Nach Abheben des Hörers 7 wird im Display 6 eines der in Fig. 3a) und 3b) dargestellten Menüs wiedergegeben.

Durch Wählen mit Hilfe der Tastatur kann der Teilnehmer dann das Telefon in üblicher Weise benutzen. Er kann jedoch auch mit Hilfe der Pfeiltasten 18 in dem dargestellten Menü aufund abwärtsgehen und dann mit Hilfe der OK-Taste 19 den gewünschten Menüpunkt auswählen. Im Prozessor 2 (Fig. 1) wird dann eine Nachricht an das Telekommunikationsnetz 4 erzeugt, welche den gewünschten Dienst - im Beispiel den Dienst Netzservice - und die Endgeräte-Information umfaßt. Letztere besteht beispielsweise darin, daß das Endgerät vom Typ XX ist oder daß es ein Display enthält, mit welchem ein Menüpunkt im Falle von Fig. 3a) oder drei Menüpunkte im Falle von Fig. 3b) dargestellt werden können. Für die Übertragung, welcher Dienst gewünscht wird, kann im D-Kanal vorzugsweise die sogenannte Keypad-Signalisierung verwendet werden, wobei jeder Taste ein Zahlencode zugeordnet ist, der in der Vermittlungsstelle ausgewertet wird.

Nach Prüfung in der Vermittlungsstelle, ob der betreffende Teilnehmer für diesen Dienst berechtigt ist, wird aus dem Menü-Server 11 das richtige Menü ausgelesen und an das Telefon übertragen. Dort erscheint dann das jeweils in Fig. 3c) und 3d) dargestellte Menü, aus dem der Teilnehmer die einzelnen Funktionen bzw. untergeordnete Menüs auswählen kann.

Bei dem in Fig. 2 dargestellten Telekommunikationsnetz 4' ist der außerhalb des eigentlichen Telekommunikationsnetzes angeordnete Menü-Server 11 über eine DSS1-Schnittstelle an eine Vermittlungsstelle 10 angeschlossen, an welcher der in Zusammenhang mit Fig. 1 beispielhaft angenommene Teilnehmer nicht angeschlossen ist. Daher werden die Endgeräte-Informationen von der Vermittlungseinrichtung 9 über die übergeordnete Vermittlungseinrichtung 12 und die Vermittlungseinrichtung 10 geleitet, um dann im Menü-Server 11 ausgewertet zu werden. Die Menü-Informationen nehmen dann den gleichen Weg in umgekehrter Richtung.

Die Figuren 3a) bis 3d) stellen Displays verschiedener Größen mit verschiedenen Menüs dar. Außer dem Display sind noch zugehörige Tasten 18 bis 23 dargestellt, nämlich Pfeiltasten 18 zum Auf- und Abwärtsgehen innerhalb der Menüs, eine OK-Taste 19, eine mit verschiedenen Funktionen belegbare Taste 20 zum Aufrufen des Menüs, eine Taste 22 und eine Löschtaste 23. Das in Fig. 3a) und 3c) dargestellte Display 6 ist in der Lage, außer einer Überschriftenzeile und zwei Softkeyfeldern in einer Auswahlzeile nur einen Menüpunkt zur Zeit darzustellen, so daß durch senkrechtes Blättern die einzelnen Menüpunkte aufgerufen werden. Demgegenüber zeigt das Display 6' in den Fällen von Fig. 3b) und 3d) jeweils drei Menüpunkte, aus denen mit einem Cursor und durch anderweitiges Markieren ein Menüpunkt ausgewählt werden kann. Auf dem Display erscheinen dann jeweils die Buchstaben OK, um die OK-Taste 19, die gegebenenfalls auch anderen Funktionen zugeordnet werden kann, als solche zu kennzeichnen.

## Patentansprüche

1. Einrichtung zur Bedienung eines an ein Telekommunikationsnetz angeschlossenen Endgerätes, insbesondere eines Telefons, mit einem Display, dadurch gekennzeichnet, daß im Endgerät vorhandene Mittel (2, 6) zur Text- und/oder Graphik-Darstellung zur Darstellung mindestens eines Menüs zur Bedienerführung aus Informationen (Menü-Informationen) ausgebildet sind, die aus dem Telekommunikationsnetz (4; 4') empfangen werden und daß im Endgerät Informationen (Endgeräte-Informationen), welche die Darstellungsmöglichkeiten des Menüs betreffen, abgelegt sind und bei Anforderung eines Dienstes an das Telekommunikationsnetz (4; 4') gesendet werden.

2. Einrichtung nach Anspruch 1, dadurch gekennzeichnet, daß bei Anforderung eines bestimmten Dienstes durch das Endgerät im Telekommunikationsnetz (4; 4') aus einer Datenbank (11) (Menü-Datenbank) Informationen über das mindestens eine zu dem bestimmten Dienst gehörende Menü in Abhängigkeit von der Endgeräte-Information ausgelesen und zum Endgerät übertragen werden, wobei die Menü-Datenbank (11) eine Tabelle über die Zuordnung der Endgeräte-Informationen zu den abgelegten Menüs aufweist.

3. Einrichtung nach Anspruch 2, dadurch gekennzeichnet, daß die Endgeräte-Information eine Typen-Bezeichnung des Endgerätes ist.

4. Einrichtung nach Anspruch 2, dadurch gekennzeichnet, daß die Endgeräte-Information Display-Daten enthält.

5. Einrichtung nach einem der vorhergehenden Ansprüche, dadurch gekennzeichnet, daß bei Nichtvorhandensein von Informationen über das Display (6; 6') des Endgerätes Informationen über mindestens ein Menü zum Endgerät übertragen werden, dessen Darstellung mit Hilfe eines einzeiligen Displays (6) sinnvoll ist.

6. Einrichtung nach einem der vorhergehenden Ansprüche, dadurch gekennzeichnet, daß im Endgerät Informationen zu einem Menü abgelegt sind, das bei Aufnahme einer Verbindung zum Telekommunikationsnetz (4; 4') und/oder bei Inanspruchnahme eines Standarddienstes dargestellt wird.

7. Einrichtung nach einem der vorhergehenden Ansprüche, dadurch gekennzeichnet, daß Bedienelemente (19; 21) vorgesehen sind, deren Funktionen entsprechend den jeweils übertragenen Menü-Informationen gesteuert sind.

8. Einrichtung nach einem der vorhergehenden Ansprüche, dadurch gekennzeichnet, daß die Menü-Informationen über den Datenkanal (D) des Basisanschlusses des ISDN übertragen werden.

9. Einrichtung nach Anspruch 8, dadurch gekennzeichnet, daß die Übertragung in Form von Displayelementen und Informationen über die Lage der Displayelemente im Menü erfolgt.
